# EUROPEAN PATENT APPLICATION

(11) **EP 1 701 062 A2**
(43) Date of publication of application: **13.09.2006**
(21) Application number: 06110574.8
(22) Date of filing: 01.03.2006
(51) Int. Cl.: F16H 7/24

(54) **Jig and method for loosening engine belt, and belt tensioner**

(30) Priority: 11.03.2005 JP 2005069611
(71) Applicant: Toyota Jidosha Kabushiki Kaisha, Toyota-shi, Aichi-ken, 471-8571 (JP)
(72) Inventor: Aoyama, Yuuji, Toyota-shi Aichi 471-8571 (JP); Mori, Ryuji, Toyota-shi Aichi 471-8571 (JP); Nagai, Shinji, Toyota-shi Aichi 471-8571 (JP); Aoki, Hiroyoshi, Toyota-shi Aichi 471-8571 (JP); Ohkubo, Mitsuo, Toyota-shi Aichi 471-8571 (JP)
(74) Representative: TBK-Patent

(57) **Abstract**

When replacing a belt (25) of an engine (11), a jig (33) is rotated while being attached to a swing arm (27) of a belt tensioner (26) such that the swing arm (27) is swung in a loosening direction to loosen the belt (25). The jig (33) has a plurality of hooking portions (44-45,59-60,61-62,63,64), one of which is selectively hooked on a first hooked portion (34) provided on the swing arm (27) and another of which is selectively hooked on a second hooked portion (35) provided on at least one of the swing arm (27) and the engine (11). When the jig (33) is rotated, the hooking portions transmit rotation of the jig (33) to the swing arm via the hooked portions. Therefore, workability of belt replacement is improved by facilitating operation for attaching a jig (33) for belt (25) replacement to the swing arm of the belt tensioner (26).

## Description

### BACKGROUND OF THE INVENTION

The present invention relates to a belt loosening jig and a method used for loosening the tension of a belt applied by a belt tensioner in order to replace the belt in an engine in which rotation is transmitted among rotary shafts via the belt and the tension of the belt is adjusted with the belt tensioner. The present invention also pertains to a belt tensioner that is suitable for belt replacement using the belt loosening jig.

In a typical engine, to transmit rotation among rotary shafts such as an output shaft (crankshaft) and rotary shafts of accessories, a pulley is attached to each rotary shaft, and a belt is wound about the pulleys. Also, the engine is provided with a belt tensioner for adjusting the tension of the belt. The belt tensioner includes a swing arm swingably supported by the engine with a shaft, an urging mechanism, which urges the swing arm in a direction to stretch the belt using the force of a spring or hydraulic pressure, and an idler pulley rotatably supported at the distal end of the swing arm and pressed against the belt. The belt tensioner adjusts the tension of the belt to be substantially constant by swinging the swing arm in accordance with the tension fluctuation of the belt, and displacing the idler pulley accordingly.

In the above mentioned engine, the tension of the belt caused by the belt tensioner needs to be loosened when replacing the belt. For this purpose, the swing arm is swung in a direction opposite to the urging direction of the urging mechanism. In the prior art, in order to swing the swing arm, the swing arm is provided with a hexagonal protrusion (boss) at a position apart from the center of swinging. When replacing the belt, the head portion of a common tool such as a wrench is fitted to the protrusion and is rotated in this state. As the wrench rotates, the swing arm swings in a direction opposite to the urging direction of the urging mechanism. The belt is loosened as the swing arm swings, permitting the belt to be removed from the pulleys of the rotary shafts.

Furthermore, "REPAIR MANUAL OF IPSUM/SUPPLEMENT" (14 - page 20, Toyota Motor Corporation, October 2003) discloses a technique for loosening the belt using a long jig with a socket attached to its distal end. The jig is longer than the above mentioned wrench. Therefore, the operation for loosening the belt, that is, the operation for fitting the socket to the hexagonal protrusion and, in this state, applying force to the jig to rotate the socket thereby swinging the swing arm around can be performed by operating the jig outside the engine compartment.

When using the above mentioned wrench, prior to rotating the wrench, the wrench needs to be attached to the swing arm, that is, the wrench head portion needs to be fitted to the protrusion such that two parallel faces of the hexagonal protrusion are sandwiched by opposing faces of the head portion of the wrench. Furthermore, when using the jig disclosed in the above document, prior to rotating the jig, the socket needs to be fitted to the protrusion such that faces of the hexagonal protrusion are surrounded by walls of hexagon socket.

However, the opposing surfaces of the wrench head portion and the hexagon socket are formed such that, when being fitted to the protrusion, only a slight gap is formed between the opposing surfaces of the wrench head portion and the protrusion and between the hexagon socket and the protrusion. Therefore, the wrench head portion and the socket are not easily fitted to the protrusion in a narrow space around the belt tensioner. In particular, in the case of the jig disclosed in the document, the jig is operated outside the engine compartment that is quite apart from the belt tensioner, which makes it even more difficult to fit the socket to the protrusion. Therefore, there is yet room for improvements in workability.

If the wrench or the jig is rotated with the head portion or the socket not firmly fitted to the hexagonal protrusion, excessive force is applied to, for example, corners of the protrusion resulting in deformation of the corners. In particular, when the wrench or the jig is rotated, since the force applied to the swing arm from the wrench or the jig according to the rotation concentrates on a single protrusion, the above mentioned problems easily occur. Therefore, in order to avoid such problems, the head portion of the wrench or the socket must be fitted to the hexagonal protrusion firmly. This makes the operation for attaching the wrench or the jig to the swing arm troublesome.

### SUMMARY OF THE INVENTION

Accordingly, it is an objective of the present invention to improve workability of belt replacement by facilitating operation for attaching a tool or a jig for belt replacement to a swing arm of a belt tensioner.

To achieve the above-mentioned objective, the present invention provides a jig used for loosening a belt of an engine. The belt transmits rotation among a plurality of rotary shafts of the engine. The engine includes a belt tensioner for adjusting the tension of the belt. The belt tensioner has a swing arm and an idler pulley supported by the swing arm. The swing arm is urged in a stretching direction in which the belt is stretched, and as a result, the idler pulley depresses the belt. When replacing the belt, the jig is rotated while being attached to the swing arm such that the swing arm is swung in a loosening direction, which is opposite to the stretching direction, to loosen the belt. The jig is characterized by a plurarity of hooking portions, one of which is selectively hooked on a first hooked portion provided on the swing arm and another of which is selectively hooked on a second hooked portion provided on at least one of the swing arm and the engine. When the jig is rotated, the hooking portions transmit rotation of the jig to the swing arm via the hooked portions.

Further, the present invention provides a belt tensioner of an engine. A belt transmits rotation among a plurality of rotary shafts of the engine. The belt tensioner includes a swing arm and an idler pulley supported by the swing arm. The swing arm is urged in a stretching direction in which the belt is stretched, and as a result, the idler pulley depresses the belt. When replacing the belt, the jig is rotated while being attached to the swing arm such that the swing arm is swung in a loosening direction, which is opposite to the stretching direction, to loosen the belt. The belt tensioner is characterized by a plurality of hooked portions on which a plurality of hooking portions provided at a plurality of positions of the jig are selectively hooked. When the jig is rotated, the hooked portions each receive force from the corresponding one of the hooking portions to transmit rotation of the jig to the swing arm.

Further, the present invention provides a method for loosening a belt, when replacing the belt of an engine. The belt transmits rotation among a plurality of rotary shafts of the engine. The engine includes a belt tensioner for adjusting the tension of the belt. The belt tensioner has a swing arm and an idler pulley supported by the swing arm. The swing arm is urged in a stretching direction in which the belt is stretched, and as a result, the idler pulley depresses the belt. When replacing the belt, the jig is rotated while being attached to the swing arm such that the swing arm is swung in a loosening direction, which is opposite to the stretching direction, to loosen the belt. The method is characterized by hooking a plurality of hooking portions provided at a plurality of positions of the jig on a first hooked portion provided on the swing arm and a second hooked portion provided on at least one of the swing arm and the engine. The method includes rotating the jig in a state where each of the hooking portions is hooked on the corresponding one of the hooked portions, and rotation of the jig is transmitted to the swing arm through the hooking portions and the hooked portions, thereby swinging the swing arm in the loosening direction.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram illustrating a state where a belt is wound about pulleys according to one embodiment of the present invention;
Fig. 2 is an enlarged schematic view illustrating the belt tensioner and the vicinity of the belt tensioner shown in Fig. 1;
Fig. 3 is a front view illustrating a belt loosening jig;
Fig. 4A is a front view illustrating an extension handle with part being omitted;
Fig. 4B is an enlarged cross-sectional view taken along line X-X in Fig. 4A;
Fig. 5 is a front view illustrating a state where the extension handle is coupled to the belt loosening jig;
Fig. 6 is an enlarged cross-sectional view taken along line Y-Y in Fig. 5;
Fig. 7A is a front view illustrating a first auxiliary tool;
Fig. 7B is an enlarged front view illustrating the distal end of the first auxiliary tool;
Fig. 8A is a front view illustrating a second auxiliary tool;
Fig. 8B is an enlarged front view illustrating a belt engaging portion at the distal end of the second auxiliary tool;
Fig. 9 is a schematic view illustrating a state where the belt loosening jig to which the extension handle is coupled is attached to the swing arm;
Fig. 10 is an enlarged schematic view illustrating the belt tensioner and the vicinity of the belt tensioner shown in Fig. 9;
Fig. 11 is a schematic view illustrating a state where the belt is loosened by rotating the belt loosening jig from the state shown in Fig. 10;
Fig. 12 is a front view illustrating a belt loosening jig according to a modified embodiment; and
Figs. 13A to 13C are front views illustrating a belt loosening jig according to modified embodiments.

### DETAILED DESCRIPTION OF THE PREFERRED EMBODIMENTS

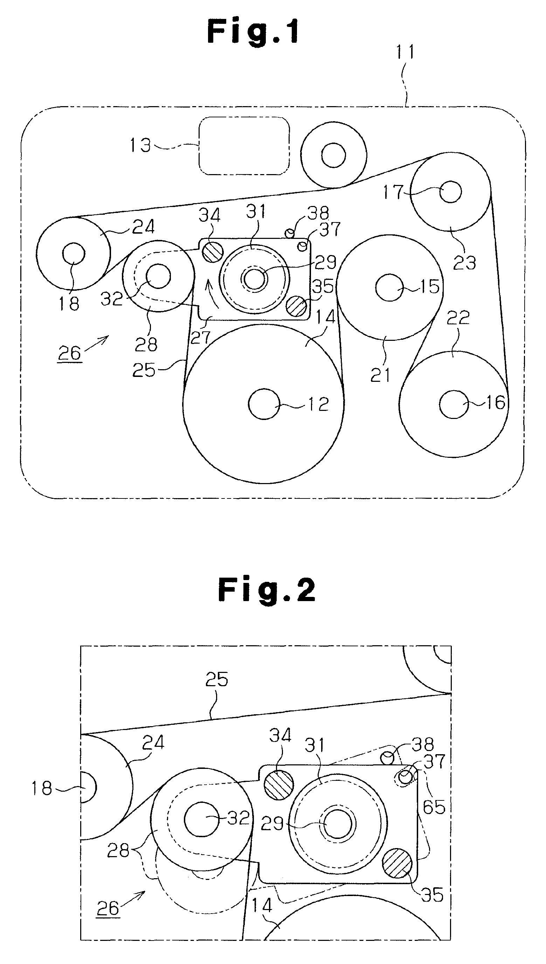

One embodiment of the present invention will now be described with reference to Figs. 1 to 11.

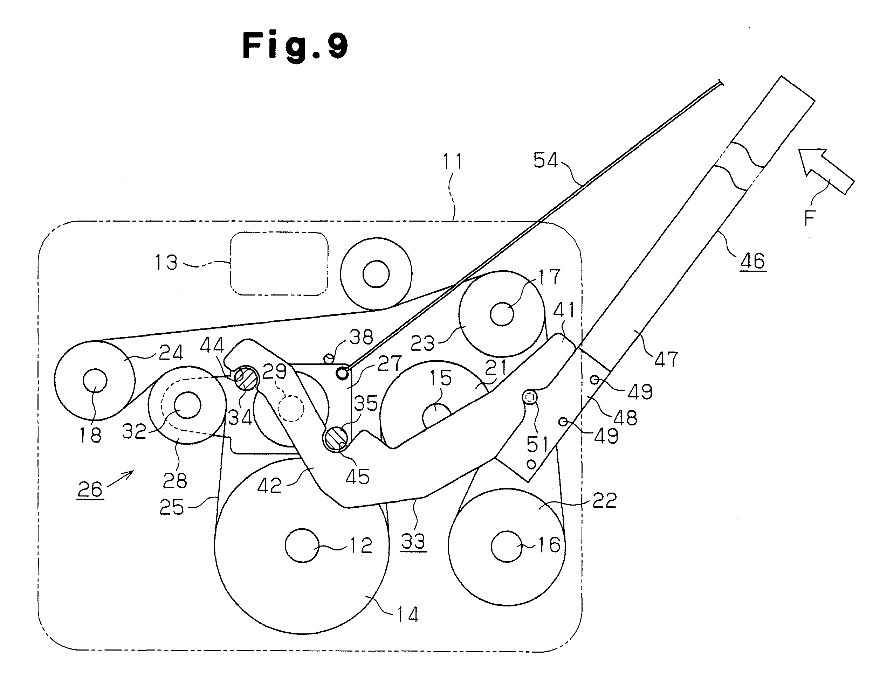

The engine compartment of an FF (front engine, front drive) vehicle accommodates a transverse-mounted multicylinder engine 11 shown by a chain double-dashed line in Fig. 1. That is, cylinders are arranged in the lateral direction (in a direction perpendicular to the sheet of Fig. 1) of the vehicle. Due to such an arrangement, an output shaft, which is a crankshaft 12 in this embodiment, also extends in the lateral direction of the vehicle. The engine 11 is supported by the vehicle body with engine mounts. A reference number 13 in Figs. 1 and 9 represents one of the engine mounts that supports the upper section of the engine 11 at the right wall of the vehicle body. Hereinafter, the right wall of the vehicle body that supports the engine 11 with the engine mount 13 is simply referred to as a vehicle body.

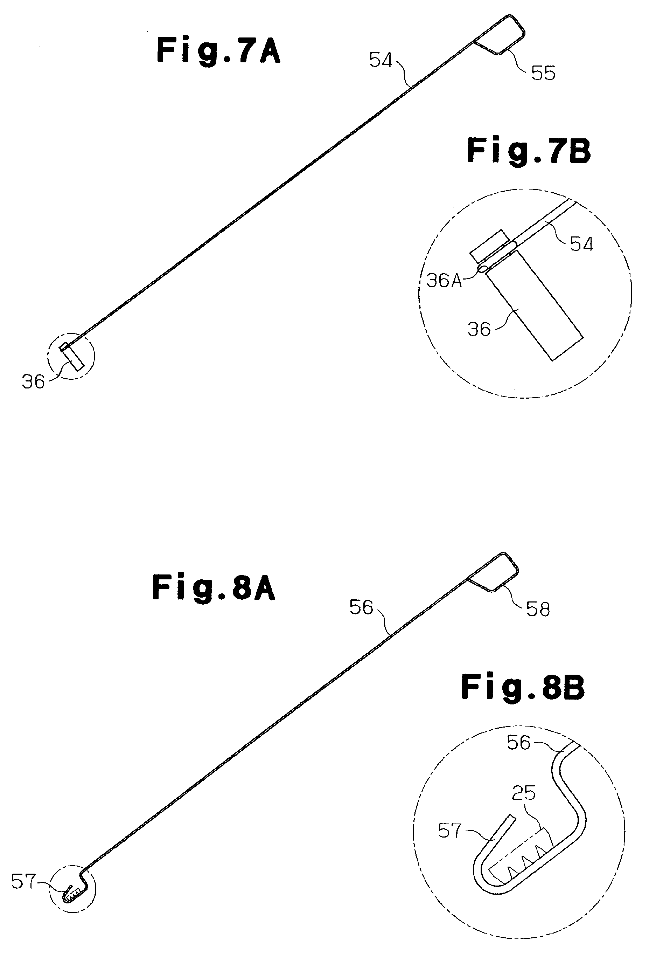

A crank pulley 14 is attached to the distal end of the crankshaft 12. In the engine 11, various types of accessories are arranged in the vicinity of the crank pulley 14. These accessories include, for example, an air-conditioning compressor, a water pump, an alternator, and a power steering pump. The accessories have rotary shafts 15, 16, 17, 18 to which pulleys 21, 22, 23, 24 are attached to rotate integrally with the rotary shafts 15, 16, 17, 18. A belt 25 is wound about the crank pulley 14 and the pulleys 21 to 24. Rotation of the crankshaft 12 is transmitted to the rotary shafts 15 to 18 via the crank pulley 14 and the pulleys 21 to 24 by the belt 25, thus driving the accessories. In this embodiment, a V-ribbed belt is used as the belt 25. One of the surfaces of the V-ribbed belt has ribs with V-shaped cross-sections, and the other surface is formed flat (see Fig. 8B).

A belt tensioner 26 is arranged between the crank pulley 14 and the pulley 24 for adjusting the tension of the belt 25 between the crank pulley 14 and the pulley 24. The belt tensioner 26 includes a swing arm 27 and an idler pulley 28. The swing arm 27 is swingably supported by the engine 11 with a shaft 29. The swing arm 27 incorporates, in the vicinity of the shaft 29, an urging mechanism 31, which urges the swing arm 27 in a direction to stretch the belt 25 (clockwise in Fig. 1) using spring force. The idler pulley 28 is rotatably supported by a shaft 32 at the distal end of the swing arm 27, and depresses the belt 25 as the swing arm 27 swings. The belt tensioner 26 adjusts the tension of the belt 25 to be substantially constant by swinging the swing arm 27 in accordance with the tension fluctuation of the belt 25, and thereby displacing the idler pulley 28.

In the engine 11, when replacing the belt 25 wound about the crank pulley 14 and the pulleys 21 to 24 in a stretched state, the compressive force of the idler pulley 28 caused by the belt tensioner 26 needs to be reduced to loosen the belt 25. For this purpose, as shown by a chain double-dashed line in Fig. 2, the swing arm 27 is forcibly swung in a loosening direction, which is a direction opposite to the urging direction of the urging mechanism 31 (counterclockwise in Fig. 2). The space between the belt tensioner 26 and the vehicle body is narrow (approximately 1 cm at the narrowest position). Therefore, it is difficult to swing the swing arm 27 in such a narrow space using commercially available tools such as a wrench.

Therefore, a dedicated belt loosening jig 33 (see Fig. 9) is used. The belt loosening jig 33 is attached to the swing arm 27 and rotated to swing the swing arm 27. In the preferred embodiment, the belt loosening jig 33 is attached to the swing arm 27 by hooking the belt loosening jig 33 on the swing arm 27.

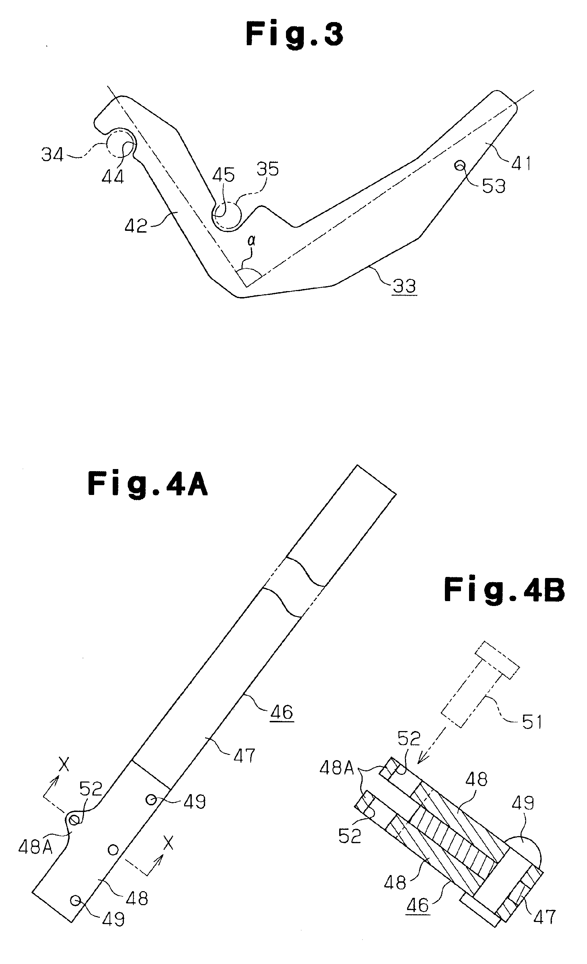

For hooking the belt loosening jig 33 on the swing arm 27, the swing arm 27 is provided with hooked portions. The hooked portions are located at positions where the belt loosening jig 33 (see Fig. 3) is hooked, and a pair of protrusions (a protrusion 34 and a protrusion 35) form the hooked portions in the preferred embodiment. The protrusions 34, 35 are desirably arranged with a certain space in between in order to reliably swing the swing arm 27 against the urging force of the urging mechanism 31. For example, the protrusions 34, 35 are arranged on the swing arm 27 at substantially opposing positions with the shaft 29 in between. That is, the protrusions 34, 35 are arranged opposite to each other with the center of swinging of the swing arm 27 (the shaft 29) located in between. The existing hexagonal protrusion provided on the swing arm shown in the BACKGROUND OF THE INVENTION section may be used as one of the protrusions 34 (or 35). Furthermore, the protrusions 34, 35 are columnar in the preferred embodiment. However, the shape of the protrusions 34, 35 is not limited to this but may be modified as required. The protrusion 34 corresponds to a first hooked portion provided on the swing arm 27. The protrusion 35 corresponds to a second hooked portion provided on at least one of the swing arm 27 and the engine 11.

Furthermore, in order to retain the swing arm 27 that is swung in a direction to loosen the belt 25 against the urging force of the urging mechanism 31, the swing arm 27 is provided with a pin through hole (first hole) 37 through which a locking member, which is a locking pin 36 (see Fig. 7) in this embodiment, is selectively inserted. A locking hole (second hole) 38 through which the locking pin 36 is selectively inserted is formed in the engine 11 on a path along which the pin through hole 37 passes when the swing arm 27 is swung about the shaft 29. The pin through hole 37 is not aligned with the locking hole 38 when not replacing the belt 25, and is aligned with the locking hole 38 while swinging the swing arm 27 to loosen the belt 25 for replacing the belt 25. Then, when the locking pin 36 is inserted in the locking hole 38 through the pin through hole 37, the locking pin 36 restricts the swing arm 27 from swinging.

Meanwhile, the entire belt loosening jig 33 is formed of a metal plate. As shown in Fig. 3, the belt loosening jig 33 includes a rotation input portion 41 and a rotation output portion 42. The rotation input portion 41 is a portion that is rotated when replacing the belt 25, and force is applied counterclockwise as viewed in Fig. 3 as the rotation input portion 41 is rotated. The rotation output portion 42 is a portion that transmits rotation of the rotation input portion 41 to the swing arm 27, and is integrally formed with the distal end (the lower end in Fig. 3) of the rotation input portion 41. The rotation input portion 41 and the rotation output portion 42 intersects each other with a predetermined angle α.

Therefore, when force is applied as described above and the rotation input portion 41 is rotated counterclockwise, the rotation output portion 42 is also rotated in the same direction. A recess 44 is formed at the distal end of the side edge of the rotation output portion 42 on the advancing side of the rotation direction. The recess 44 forms a hooking portion that hooks on the protrusion 34. In addition, a recess 45 is formed at the proximal end of the side edge of the rotation output portion 42 on the trailing side of the rotation direction. The recess 45 forms the hooking portion that hooks on the protrusion 35. Therefore, the recesses 44, 45 are dented in opposite directions from each other. That is, the recesses 44, 45 are dented in opposite directions from each other along a direction intersecting the direction in which the rotation output portion 42 extends.

The recesses 44, 45 each have a transmitting portion for transmitting force to the corresponding one of the protrusions 34, 35. The transmitting portions abut against and depress the protrusions 34, 35. In a state where each of the recesses 44, 45 is hooked on corresponding one of the protrusions 34, 35, the transmitting portions are oriented in opposite directions from each other along a direction intersecting a straight line, which connects the protrusions 34, 35.

The engine 11 is supported by the vehicle body with the engine mount 13 arranged approximately above the belt tensioner 26 as described above. As shown in Fig. 9, the engine mount 13 is located on the path along which the rotation input portion 41 passes when the belt loosening jig 33 is rotated. Meanwhile, when replacing the belt 25, the swing arm 27 needs to be swung by a certain angle or more to reduce the compressive force of the idler pulley 28 against the belt 25. Also, the position (such as inclination) of the rotation output portion 42 when the recesses 44, 45 are each hooked on the corresponding one of the protrusions 34, 35 is determined by the position of the protrusions 34, 35. Therefore, if the angle α (see Fig. 3) between the rotation input portion 41 and the rotation output portion 42 is too small, rotation of the rotation input portion 41 is restricted by the engine mount 13, and the swing arm 27 may not be able to be swung by a required angle. Therefore, when designing the belt loosening jig 33, it is important to set the angle α such that the swing arm 27 can be swung at least by an angle necessary for loosening the belt 25.

The thickness of the belt loosening jig 33 is desirably set in accordance with, for example, the distance between the belt tensioner 26 and the vehicle body (the size of the space between the belt tensioner 26 and the vehicle body), the accessibility to the space, and the strength, and may be set to, for example, approximately 4.5 mm.

Furthermore, an extension handle 46 is detachably coupled to the rotation input portion 41 of the belt loosening jig 33 as required to increase the substantial length of the belt loosening jig 33. The extension handle 46 includes a handle main body 47 and a pair of sandwiching pieces 48, 48 as shown in Figs. 4A and 4B. The handle main body 47 is formed as a long rod and has a thickness substantially the same as that of the belt loosening jig 33. The handle main body 47 desirably has a length enough for the end portion of the extension handle 46 (the upper end in Fig. 4A) to be exposed from the engine compartment when the belt loosening jig 33 is attached to the swing arm 27.

The sandwiching pieces 48, 48 are arranged at one end of the handle main body 47 in the longitudinal direction (the lower end in Fig. 4A) on both sides of the handle main body 47 in the thickness direction such that the sandwiching pieces 48, 48 overlap each other. The sandwiching pieces 48, 48 are fastened to the handle main body 47 with fasteners 49 such as rivets that extend through the sandwiching pieces 48, 48 and the handle main body 47. Each sandwiching piece 48 has a bulge 48A that bulges in the lateral direction of the handle main body 47. Through holes are formed at opposing positions of the bulges 48A such that a coupling pin 51 can be inserted.

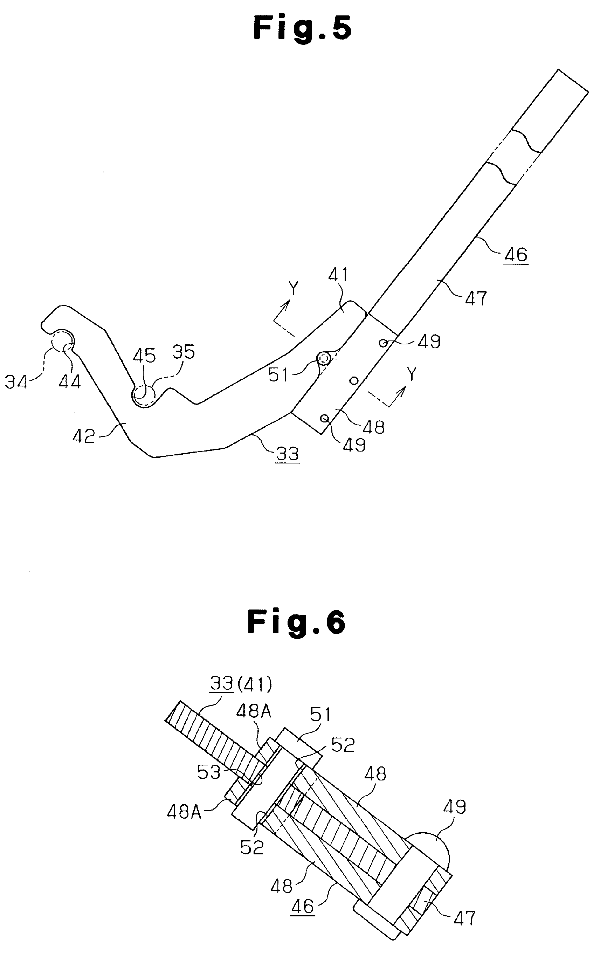

Meanwhile, as shown in Fig. 3, a through hole 53 that permits the coupling pin 51 to be inserted through is formed in the rotation input portion 41 of the belt loosening jig 33. The coupling pin 51 and the through hole 53 forms coupling means that couples the extension handle 46 to the rotation input portion 41. As shown in Figs. 5 and 6, the coupling pin 51 is inserted in the through holes 53, 52, thereby coupling the extension handle 46 to the belt loosening jig 33 such that the extension handle 46 cannot be rotated with respect to the belt loosening jig 33.

The extension handle 46 configured as described above is originally produced as a special tool for detaching various types of parts of the engine 11, and is not produced specially for the belt loosening jig 33. In the preferred embodiment, the existing special tool is merely used as the extension handle 46 to extend the rotation input portion 41.

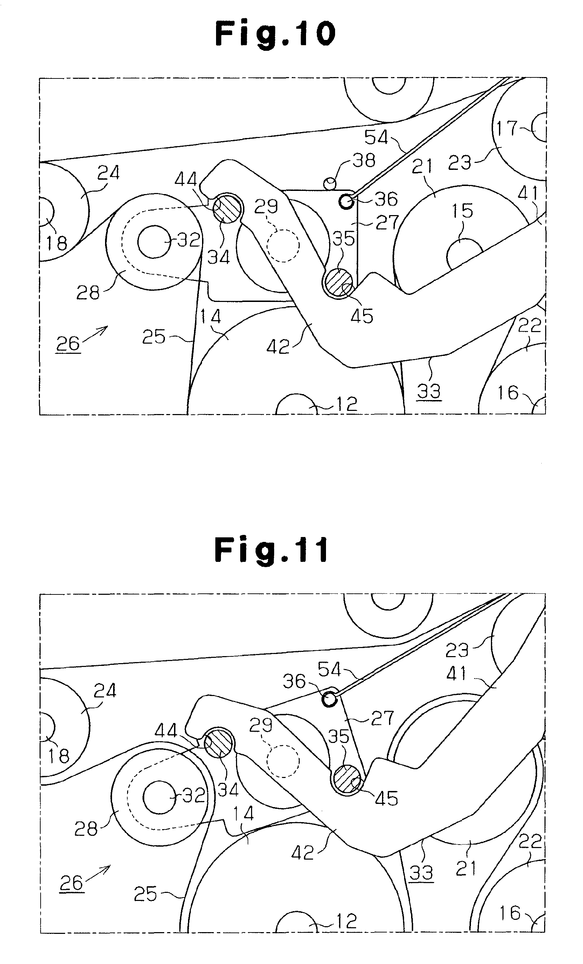

Furthermore, in addition to the belt loosening jig 33, two types of auxiliary tools (a first auxiliary tool 54 and a second auxiliary tool 56) are prepared to facilitate replacing the belt 25. As shown in Figs. 7A and 7B, the first auxiliary tool 54 is used for selectively inserting and removing the locking pin 36 to and from the pin through hole 37 of the swing arm 27 and the locking hole 38 of the engine 11 from the outside of the engine compartment. The first auxiliary tool 54 is formed of a wire rod such as metal. One end of the first auxiliary tool 54 (lower end in Fig. 7A) is loosely wound about an annular groove 36A formed in the outer circumference of the locking pin 36 (see Figs. 7B and 10). This is because, if the distal end of the first auxiliary tool 54 is tightly wound about the locking pin 36, the first auxiliary tool 54 may interfere with the engine 11 or peripheral components in a state where the locking pin 36 is inserted in the pin through hole 37 and the locking hole 38. Therefore, by loosely winding the distal end of the first auxiliary tool 54 about the locking pin 36, the first auxiliary tool 54 is permitted to tilt with the wound portion serving as a fulcrum. The interference between the first auxiliary tool 54 and the engine 11 or peripheral components is avoided by tilting the first auxiliary tool 54.

Moreover, a grip 55 is provided at the end of the first auxiliary tool 54 opposite to the portion wound about the locking pin 36. The grip 55 may be formed by bending the wire rod forming the first auxiliary tool 54, or may be formed by a member different from the wire rod.

Figs. 8A and 8B show a second auxiliary tool 56. The second auxiliary tool 56 is used to remove the belt 25 that is loosened by the belt loosening jig 33 from the crank pulley 14 and the pulleys 21 to 24, and to wind a new belt 25 about the pulleys 21 to 24 from the outside of the engine compartment. The second auxiliary tool 56 is formed by a wire rod such as metal. A belt engaging portion 57 is formed at one end of the second auxiliary tool 56 (the lower end as shown in Fig. 8A) by folding back the end portion. The belt 25 is placed in the belt engaging portion 57 to be engaged. In addition, a grip 58 is provided at the end of the second auxiliary tool 56 opposite to the belt engaging portion 57. The grip 58 may be formed by bending the wire rod forming the second auxiliary tool 56, or may be formed by a member different from the wire rod.

Next, a method for replacing the belt 25 using the belt loosening jig 33, the extension handle 46, and the auxiliary tools 54, 56 will now be described.

First, the extension handle 46 is coupled to the belt loosening jig 33 as required. When coupling the extension handle 46 to the belt loosening jig 33, a section of the rotation input portion 41 in the vicinity of the through hole 53 is inserted between the bulges 48A, 48A as shown in Figs. 5 and 6. The rotation input portion 41 is slid in the longitudinal direction along the handle main body 47 such that the through hole 53 is aligned with the through holes 52. When the through holes 52, 53, 52 are aligned with each other, the coupling pin 51 is inserted in the through holes 52, 53, 52. Thus, the coupling pin 51 couples the rotation input portion 41 to the extension handle 46 such that the rotation input portion 41 does not rotate with respect to the extension handle 46. In this coupling state, the substantial length of the rotation input portion 41 is extended by the length of the extension handle 46.

While holding the extension handle 46, the belt loosening jig 33 and the extension handle 46 are inserted in the narrow space between the belt tensioner 26 and the vehicle body in this order from front and above of the engine 11. At this time, the belt loosening jig 33 is inserted in the space from the rotation output portion 42 toward the rotation input portion 41.

After inserting the belt loosening jig 33 until the rotation output portion 42 is located in the vicinity of the swing arm 27, the inclination of the rotation output portion 42 is roughly adjusted such that the recess 44 is higher than the protrusion 34 and the recess 45 is lower than the protrusion 35 as shown in Fig. 9. The entire belt loosening jig 33 is then moved closer to the engine 11 (moved in parallel) while maintaining the inclination. When the rotation output portion 42 abuts against the swing arm 27, the belt loosening jig 33 is rotated counterclockwise by lifting the extension handle 46 upward. While rotating the belt loosening jig 33, either one of the recesses 44, 45 contacts the corresponding one of the protrusions 34, 35, and when the belt loosening jig 33 is rotated further, the remaining one of the recesses 45, 44 contacts the corresponding one of the protrusions 35, 34. When the belt loosening jig 33 makes contact at two positions, two recesses 44, 45 of the rotation output portion 42 are each hooked on the corresponding one of the protrusions 34, 35 of the swing arm 27 as shown in Figs. 9 and 10. That is, rotation of the belt loosening jig 33 can be transmitted to the swing arm 27 (attached state).

In the series of operations for attaching the belt loosening jig 33 to the swing arm 27, the head portion of the wrench or the socket of the jig distal end (see the above mentioned document) does not need to be tightly fitted to the hexagonal protrusion as in the BACKGROUND OF THE INVENTION section. The belt loosening jig 33 is attached to the swing arm 27 by performing the above mentioned rough operation.

When the belt loosening jig 33 is attached to the swing arm 27, the upper end of the extension handle 46 is exposed from the engine compartment. Therefore, an operator can rotate the rotation input portion 41 via the exposed portion of the extension handle 46 even from the outside of the engine compartment apart from the belt tensioner 26.

Since the belt loosening jig 33 is formed to be thin with plate material, even if the space between the belt tensioner 26 and the vehicle body is narrow and an operating space for the belt replacement is small, the belt loosening jig 33 is prevented from interfering with the belt tensioner 26 and the peripheral components.

Also, the grip 55 of the first auxiliary tool 54 is held and operated outside the engine compartment, and the locking pin 36 attached to the distal end of the first auxiliary tool 54 is inserted in the pin through hole 37 of the swing arm 27. When the first auxiliary tool 54 is flexed at a position where the distal end of the locking pin 36 is aligned with the pin through hole 37, the locking pin 36 is pressed into the pin through hole 37. At this time, since the pin through hole 37 is not aligned with the locking hole 38, the locking pin 36 stops as it abuts against the wall of the engine 11.

Subsequently, force F shown by an arrow in Fig. 9 is applied to the extension handle 46 with the first auxiliary tool 54 being flexed, thereby rotating the belt loosening jig 33 counterclockwise via the rotation input portion 41 as shown in Fig. 11. The rotation direction at this time swings the swing arm 27 in a direction opposite to the urging direction of the urging mechanism 31 and loosens the belt 25.

Since the extension handle 46 is coupled to the belt loosening jig 33, the distance from the center of swinging (the shaft 29) of the swing arm 27 to the position (force point) of the extension handle 46 where the force F is applied is extended. Therefore, the swing arm 27 is swung to loosen the belt 25 by only applying the force F that is smaller than the force applied when the extension handle 46 is not coupled to the belt loosening jig 33.

As the extension handle 46 is rotated, rotation of the belt loosening jig 33 is transmitted to the swing arm 27 via the recesses 44, 45, and the protrusions 34, 35, which contact the recesses 44, 45. Since the number of the recesses 44, 45 and the number of the protrusions 34, 35 are two each, the transmission of rotation occurs at two positions of the swing arm 27. This reduces the force applied to each of the protrusions 34, 35 and the recesses 44, 45 when the swing arm 27 is swung.

When rotation is transmitted at two positions, the swing arm 27 is swung in a direction opposite to the urging direction of the urging mechanism 31. As the swing arm 27 is swung, the force of the idler pulley 28 that depresses the belt 25 is reduced, and the belt 25 is loosened.

As the swing arm 27 is swung by rotating the belt loosening jig 33, the pin through hole 37 is displaced. While the swing arm 27 is swung, the pin through hole 37 is aligned with the locking hole 38 of the engine 11. At this time, when the first auxiliary tool 54 is flexed to depress the locking pin 36 as described above, the distal end of the locking pin 36 projects from the pin through hole 37 and enters the locking hole 38. When the locking pin 36 extends through the pin through hole 37 and the locking hole 38, swinging of the swing arm 27 is restricted by the locking pin 36. Therefore, although the belt loosening jig 33 and the first auxiliary tool 54 are not continuously operated (although force is not continuously applied) even if the swing arm 27 is urged in a direction to stretch the belt 25, the belt 25 is kept being loosened.

When the belt 25 is loosened as described above, the grip 58 of the second auxiliary tool 56 is held and operated outside the engine compartment to slide a desired section of the belt 25 into the belt engaging portion 57. When the belt 25 is engaged with the belt engaging portion 57, the second auxiliary tool 56 is operated to remove part of the belt 25 from the pulley. Then, the operation for sliding the belt 25 into the belt engaging portion 57 and the operation for removing the belt 25 from the pulley are performed at several positions of the belt 25 as required. When the belt 25 is removed from all the pulleys 14, 21 to 24 by performing these operations, the belt 25 is drawn out of the engine compartment.

When winding the new belt 25 about the pulleys 14, 21 to 24, operations reverse to the above operations are performed. First, the belt 25 is inserted in a space between the belt tensioner 26 and the vehicle body from the outside of the engine compartment, and arranged roughly around the belt tensioner 26. The grip 58 of the second auxiliary tool 56 is held and operated outside the engine compartment to insert part of the belt 25 in the belt engaging portion 57. When the belt 25 is engaged with the belt engaging portion 57, the second auxiliary tool 56 is operated to wind part of the belt 25 about the pulley. The operation for inserting the belt 25 in the belt engaging portion 57 and the operation for winding the belt 25 about the pulley are performed at several positions of the belt 25 as required. The belt 25 is wound about all the pulleys 14, 21 to 24 by performing these operations.

Next, while holding the extension handle 46 outside the engine compartment, the first auxiliary tool 54 is flexed in a direction opposite to the case when removing the belt 25. When the distal end of the locking pin 36 that has been in the locking hole 38 is removed from the locking hole 38 by flexing the first auxiliary tool 54, the coupling state of the swing arm 27 and the engine 11 by the locking pin 36 is released, thereby permitting swinging of the swing arm 27. Furthermore, when the locking pin 36 is removed from the pin through hole 37, the first auxiliary tool 54 can be drawn out of the engine compartment from the space between the belt tensioner 26 and the vehicle body.

When the swing arm 27 is permitted to swing by removing the locking pin 36, the force applied to the extension handle 46 is gradually reduced. This causes the swing arm 27 to swing in a direction to stretch the belt 25 by the urging force of the urging mechanism 31. When the belt 25 is wound about all the pulleys 14, 21 to 24 in a stretched state by the swinging of the swing arm 27, the pair of recesses 44, 45 of the rotation output portion 42 are removed from the corresponding protrusions 34, 35 of the swing arm 27 by operating the extension handle 46. The extension handle 46 and the belt loosening jig 33 are drawn out of the engine compartment from the space between the belt tensioner 26 and the vehicle body.

When the coupling pin 51 is removed from the through holes 52, 53, 52 of the extension handle 46 and the belt loosening jig 33 that are drawn out of the engine compartment as described above, the coupling state of the belt loosening jig 33 and the extension handle 46 by the coupling pin 51 is released. This reduces the size of the belt loosening jig 33 and the extension handle 46, which is suitable for storage.

The preferred embodiment has the following advantages.
(1) The rotation of the belt loosening jig 33 is transmitted to the swing arm 27 via the recesses 44, 45 and the protrusions 34, 35 to swing the swing arm 27 in a direction opposite to the urging direction of the urging mechanism 31. With this configuration, the rotation of the belt loosening jig 33 can be transmitted to the swing arm 27 (attached state) by only hooking the recesses 44, 45 of the rotation output portion 42 on the protrusions 34, 35 and making at least part of each recess 44, 45 in contact with the corresponding one of the protrusions 34, 35. Therefore, even if the space between the belt tensioner 26 and the vehicle body is narrow, and the operation space for the belt replacement is small, the belt loosening jig 33 is easily attached to the swing arm 27 unlike the technique shown in the BACKGROUND OF THE INVENTION section, in which the head portion of the wrench or the socket of the jig distal end is fitted to the hexagonal protrusion.
(2) In association with the advantage (1), since the rotation of the belt loosening jig 33 is transmitted to the swing arm 27 via combination of the recesses 44, 45 and the protrusions 34, 35, the force applied to each of the recesses 44, 45 and the protrusions 34, 35 when the swing arm 27 is swung is reduced. Therefore, as compared to the technique shown in the BACKGROUND OF THE INVENTION section, in which the head portion of the wrench or the socket of the jig distal end is fitted to a single hexagonal protrusion, deformation of the recesses 44, 45 and the protrusions 34, 35 caused when the belt loosening jig 33 is unlikely to occur.
(3) The entire belt loosening jig 33 is formed to be thin with metal plate. Therefore, even if the space between the belt tensioner 26 and the vehicle body is narrow, and the operation space for the belt replacement is small, the belt loosening jig 33 is less likely to interfere with the belt tensioner 26 and the peripheral components as compared to the technique shown in the BACKGROUND OF THE INVENTION section that uses the wrench or the jig having the socket. As a result, the operation for inserting the belt loosening jig 33 to the vicinity of the belt tensioner 26 through the above mentioned space, and the operation for hooking the recesses 44, 45 of the rotation output portion 42 on the protrusions 34, 35 are facilitated.
   As described above, the force applied to each of the recesses 44, 45 and the protrusions 34, 35 when the belt loosening jig 33 is rotated is small. Therefore, although the belt loosening jig 33 is formed to be thin with plate material, deformation does not easily occur, and rotation of the belt loosening jig 33 is reliably transmitted to the swing arm 27 to swing the swing arm 27.
(4) The rotation input portion 41 of the belt loosening jig 33 is provided with the through hole 53. The coupling pin 51, which is inserted in the through hole 53, couples the extension handle 46 to the belt loosening jig 33. This substantially extends the length of the rotation input portion 41, and permits the rotation input portion 41 to be rotated from the outside of the engine compartment via the extension handle 46. Therefore, the operator does not need to put a hand in the narrow space between the belt tensioner 26 and the vehicle body to rotate the belt loosening jig 33.
   Furthermore, the distance from the center of swinging (fulcrum) of the swing arm 27 to the position (force point) of the extension handle 46 where the force F is applied to rotate the extension handle 46 is extended by coupling the extension handle 46 to the belt loosening jig 33. Therefore, the swing arm 27 is swung with a reduced force F to loosen the belt 25.
(5) The pair of protrusions 34, 35, which protrude from the swing arm 27, form the hooked portions. Therefore, the hooked portions on which the hooking portions (the recesses 44, 45) of the belt loosening jig 33 are hooked are easily formed by providing a small number of protrusions 34, 35 on the swing arm 27.
   Also, in the technique shown in the BACKGROUND OF THE INVENTION SECTION, in which a single protrusion is provided on the swing arm as the hooked portion, the protrusion needs to be noncircular such as hexagonal in order to attach the wrench head portion or the socket to the protrusion so that the wrench head portion or the socket does not rotate relative to the protrusion. This is because rotation of the wrench or the jig is transmitted to the swing arm 27 via the protrusion. In this respect, in the preferred embodiment of providing two protrusions 34, 35 on the swing arm 27, rotation of the belt loosening jig 33 is transmitted to the swing arm 27 via the protrusions 34, 35 regardless of the shape of the protrusions 34, 35.
   Furthermore, since the shape of the protrusions 34, 35 is not particularly restricted as described above, the hexagonal protrusion of the prior art technique may be used as one of the hooked portions. In this case, the belt tensioner shown in the BACKGROUND OF THE INVENTION SECTION may be used by simply adding an additional protrusion 34 (or 35) .
(6) The swing arm 27 is provided with the pin through hole 37, and the engine 11 is provided with the locking hole 38 on the path along which the pin through hole 37 passes when the swing arm 27 is swung about the shaft 29. When the pin through hole 37 is aligned with the locking hole 38 during the process of swinging the swing arm 27 by rotating the belt loosening jig 33, the locking pin 36 is inserted in the locking hole 38 through the pin through hole 37 so that the locking pin 36 extends through the pin through hole 37 and the locking hole 38.
   When the locking pin 36 extends through the pin through hole 37 and the locking hole 38 as described above, swinging of the swing arm 27 is restricted by the locking pin 36. Therefore, although the swing arm 27 is urged in a direction to stretch the belt 25 by the urging mechanism 31, even if the force applied to the rotation input portion 41 of the belt loosening jig 33 is reduced, the belt 25 is kept loosened. This facilitates the replacement operation of the belt 25.
(7) The locking pin 36 of the advantage (6) is attached to the distal end of the long and thin first auxiliary tool 54 formed of a wire rod. Therefore, the operations for inserting and removing the locking pin 36 to and from the pin through hole 37 and the locking hole 38 are performed by remote handling of the first auxiliary tool 54 from the outside of the engine compartment.
(8) The second auxiliary tool 56 is provided that is entirely formed of a wire rod and has the belt engaging portion 57 at its distal end. Therefore, the operation for removing the belt 25 that is loosened by using the belt loosening jig 33 from the pulleys 14, 21 to 24, and the operation for winding the new belt 25 about the pulleys 14, 21 to 24 are performed by remote handling of the second auxiliary tool 56 from the outside of the engine compartment.
(9) As described above, the belt 25 can be replaced from the outside of the engine compartment by using the belt loosening jig 33 to which the extension handle 46 is coupled, the first auxiliary tool 54, and the second auxiliary tool 56. Therefore, when replacing the belt 25, the peripheral components around the belt tensioner 26 and an under cover below the engine 11 do not need to be removed to secure the operation space.

It should be apparent to those skilled in the art that the present invention may be embodied in many other specific forms without departing from the spirit or scope of the invention. Particularly, it should be understood that the invention may be embodied in the following forms.

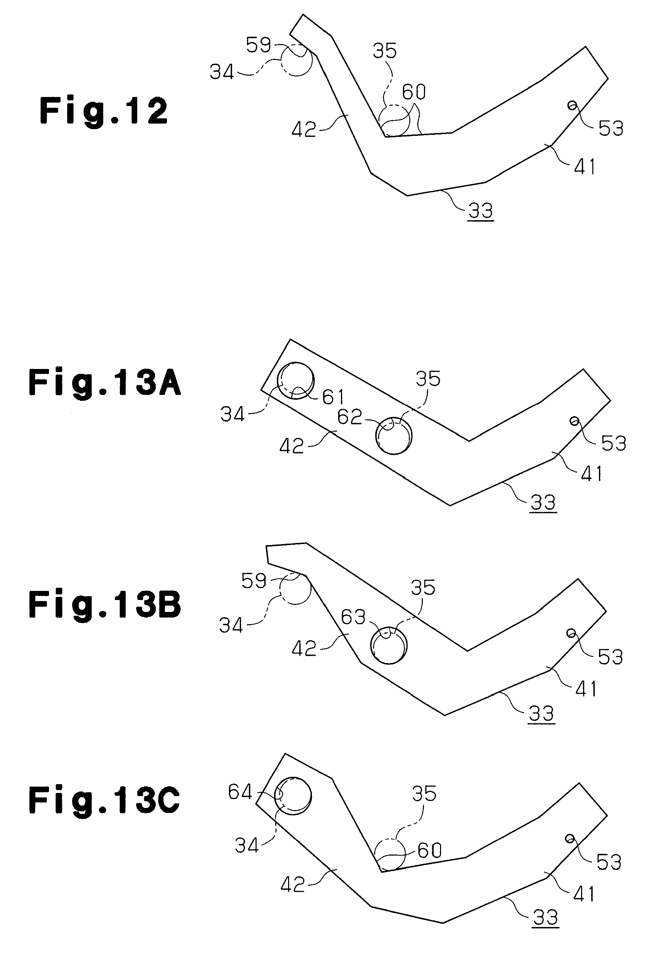

Instead of the recesses 44, 45 of the preferred embodiment, the side edges of the rotation output portion 42 may form the hooking portions as shown in Fig. 12. In this case, concave sections 59, 60 of the side edges that form the hooking portions may be straight or curved. However, when the side edges are straight, the side edges of the rotation output portion 42 preferably have an acute angle such that the hooking portions can hook on the protrusions 34, 35.

At least one of the hooking portions of the rotation output portion 42 may be a hole formed in the rotation output portion 42. In this case, the inner diameter of the hole is set greater than the diameter of the protrusions 34, 35. Figs. 13A to 13C each show one example of the hole. In these examples, two hooking portions are provided. One of the hooking portions is located at the distal end of the rotation output portion 42, and the other one of the hooking portions is located at the proximal end (section closer to the rotation input portion 41) of the rotation output portion 42.

Fig. 13A shows an example where the hooking portion on the distal end and the hooking portion on the proximal end are formed by holes 61, 62 provided in the rotation output portion 42.

Fig. 13B shows an example where the hooking portion on the proximal end is formed by a hole 63 provided in the rotation output portion 42.

Fig. 13C shows an example where the hooking portion on the distal end is formed by a hole 64 provided in the rotation output portion 42.

When hooking the holes 61 to 64 of the rotation output portion 42 on the protrusions 34, 35, the belt loosening jig 33 is gradually brought closer to the belt tensioner 26 from the side, and the protrusions 34, 35 are inserted in the hooking portions (the holes 61 to 64). This operation is easier than the operation for tightly fitting the head portion of the wrench or the socket of the jig distal end to the hexagonal protrusion as in the BACKGROUND OF THE INVENTION section.

The hooked portions may be formed by recesses instead of the protrusions 34, 35, and the hooking portions may be formed by protrusions instead of the recesses 44, 45.

The number of the hooking portions and the hooked portions may be three or more.

The rotation input portion 41 of the belt loosening jig 33 may be formed longer than that described in the preferred embodiment. For example, the rotation input portion 41 may be about the same length as when the extension handle 46 is coupled to the rotation input portion 41.

The position of the protrusions 34, 35 on the swing arm 27 may be changed from that in the preferred embodiment. In this case, the shape of the belt loosening jig 33 is changed in accordance with the position of the protrusions 34, 35.

Instead of the pin through hole 37 of the swing arm 27, a notch 65 may be provided as shown by a chain double-dashed line in Fig. 2. In this case, during the process of swinging the swing arm 27, when the notch 65 is aligned with the locking hole 38, the locking pin 36 is inserted in the locking hole 38 through the notch 65. When the locking pin 36 extends through the notch 65 and the locking hole 38, swinging of the swing arm 27 is restricted by the locking pin 36. Therefore, even if the force applied to the rotation input portion 41 of the belt loosening jig 33 is reduced, the belt 25 is kept loosened. This facilitates the replacement of the belt 25 as in the case of the pin through hole 37.

At least one of the protrusions 34, 35 (hooked portions) must be provided on the swing arm 27, but the remaining protrusion may be provided on the swing arm 27 or on the engine 11. More specifically, the remaining protrusion may be provided on the engine 11 itself or various types of components attached to the engine 11. In this manner, even if the positions of the protrusions 34, 35 are changed, the operations and advantages that are the same as the preferred embodiment are obtained.

The urging mechanism 31 of the belt tensioner 26 may use hydraulic pressure instead of the spring to urge the swing arm 27 in a direction to stretch the belt 25.

The extension handle 46 may have a configuration different from that of the preferred embodiment.

The present invention may be applied to engines in which a belt other than the V-ribbed belt is wound about the pulleys. The belts include, for example, a flat belt, a V-belt, and a timing belt.

Therefore, the present examples and embodiments are to be considered as illustrative and not restrictive and the invention is not to be limited to the details given herein, but may be modified within the scope and equivalence of the appended claims.

When replacing a belt of an engine, a jig is rotated while being attached to a swing arm of a belt tensioner such that the swing arm is swung in a loosening direction to loosen the belt. The jig has a plurality of hooking portions, one of which is selectively hooked on a first hooked portion provided on the swing arm and another of which is selectively hooked on a second hooked portion provided on at least one of the swing arm and the engine. When the jig is rotated, the hooking portions transmit rotation of the jig to the swing arm via the hooked portions. Therefore, workability of belt replacement is improved by facilitating operation for attaching a jig for belt replacement to the swing arm of the belt tensioner.

## Claims

1. A jig (33) used for loosening a belt (25) of an engine (11), the belt (25) transmitting rotation among a plurality of rotary shafts (12, 15-18) of the engine (11), the engine (11) including a belt tensioner (26) for adjusting the tension of the belt (25), the belt tensioner (26) having a swing arm (27) and an idler pulley (28) supported by the swing arm (27), the swing arm (27) being urged in a stretching direction in which the belt (25) is stretched, and as a result, the idler pulley (28) depresses the belt (25),
wherein, when replacing the belt (25), the jig (33) is rotated while being attached to the swing arm (27) such that the swing arm (27) is swung in a loosening direction, which is opposite to the stretching direction, to loosen the belt (25), the jig being **characterized by:**
a plurality of hooking portions (44-45, 59-60, 61-62, 63, 64), one of which is selectively hooked on a first hooked portion (34) provided on the swing arm (27) and another of which is selectively hooked on a second hooked portion (35) provided on at least one of the swing arm (27) and the engine (11),
wherein, when the jig (33) is rotated, the hooking portions (44-45, 59-60, 61-62, 63, 64) transmit rotation of the jig (33) to the swing arm (27) via the hooked portions (34, 35) .

2. The jig (33) according to claim 1, **characterized in that** the entire jig (33) is formed of a plate material.

3. The jig (33) according to claim 1 or 2, **characterized in that** the jig (33) includes a rotation input portion (41) that is rotated and a rotation output portion (42) that has the hooking portions (44-45, 59-60, 61-62, 63, 64) .

4. The jig according to claim 3, **characterized in that** the hooking portions (44-45, 59-60, 61-62, 63, 64) are dented in opposite directions from each other along a direction intersecting the direction in which the rotation output portion (42) extends.

5. The jig (33) according to claim 3, **characterized by** coupling means (51, 53) for coupling an extension handle (46) to the rotation input portion (41).

6. The jig (33) according to any one of claims 1 to 5, **characterized in that** the hooking portions (44-45, 59-60, 61-62, 63, 64) each have a transmitting portion for transmitting force to the corresponding one of the hooked portions (34, 35), wherein, in a state where each of the hooking portions (44-45, 59-60, 61-62, 63, 64) is hooked on the corresponding one of the hooked portions (34, 35), the transmitting portions are oriented in opposite directions from each other along a direction intersecting a straight line that connects the first and second hooked portions (34, 35) .

7. A belt tensioner (26) of an engine (11), wherein a belt (25) transmits rotation among a plurality of rotary shafts (12, 15-18) of the engine (11), the belt tensioner (26) including a swing arm (27) and an idler pulley (28) supported by the swing arm (27), the swing arm (27) being urged in a stretching direction in which the belt (25) is stretched, and as a result, the idler pulley (28) depresses the belt (25),
wherein, when replacing the belt (25), the jig (33) is rotated while being attached to the swing arm (27) such that the swing arm (27) is swung in a loosening direction, which is opposite to the stretching direction, to loosen the belt (25), the belt tensioner being **characterized by**:
a plurality of hooked portions (34, 35) on which a plurality of hooking portions (44-45, 59-60, 61-62, 63, 64) provided at a plurality of positions of the jig (33) are selectively hooked, and when the jig (33) is rotated, the hooked portions (34, 35) each receive force from the corresponding one of the hooking portions (44-45, 59-60, 61-62, 63, 64) to transmit rotation of the jig (33) to the swing arm (27).

8. The belt tensioner (26) according to claim 7, **characterized in that** the hooked portions (34, 35) are arranged opposite to each other with an axis (29) of swinging of the swing arm (27) in between.

9. The belt tensioner (26) according to claim 7 or 8, **characterized in that** the hooked portions (34, 35) include a plurality of protrusions (34, 35), which protrude from the swing arm (27).

10. The belt tensioner (26) according to any one of claims 7 to 9, **characterized in that** the engine (11) is provided with a first hole (38), the swing arm (27) has one of a second hole (37) and a notch (65), and wherein one of the second hole (37) and the notch (65) is aligned with the first hole (38) during a process in which the swing arm (27) is swung in the loosening direction.

11. A method for loosening a belt (25) when replacing the belt (25) of an engine (11), the belt (25) transmits rotation among a plurality of rotary shafts (12, 15-18) of the engine (11), the engine (11) including a belt tensioner (26) for adjusting the tension of the belt (25), the belt tensioner (26) having a swing arm (27) and an idler pulley (28) supported by the swing arm (27), the swing arm (27) being urged in a stretching direction in which the belt (25) is stretched, and as a result, the idler pulley (28) depresses the belt (25),
wherein, when replacing the belt (25), the jig (33) is rotated while being attached to the swing arm (27) such that the swing arm (27) is swung in a loosening direction, which is opposite to the stretching direction, to loosen the belt (25), the method being **characterized by:**
hooking a plurality of hooking portions (44-45, 59-60, 61-62, 63, 64) provided at a plurality of positions of the jig (33) on a first hooked portion (34) provided on the swing arm (27) and a second hooked portion (35) provided on at least one of the swing arm (27) and the engine (11); and
rotating the jig (33) in a state where each of the hooking portions (44-45, 59-60, 61-62, 63, 64) is hooked on the corresponding one of the hooked portions (34, 35), and rotation of the jig (33) is transmitted to the swing arm (27) through the hooking portions (44-45, 59-60, 61-62, 63, 64) and the hooked portions (34, 35), thereby swinging the swing arm (27) in the loosening direction.

12. The method according to claim 11, **characterized in that** the engine (11) is provided with a first hole (38), and the swing arm (27) is provided with one of a second hole (37) and a notch (65), the method further comprising:
aligning one of the second hole (37) and the notch (65) with the first hole (38) during a process in which the jig (33) is rotated to swing the swing arm (27) in the loosening direction; and
inserting a locking member (36) in the first hole (38) and one of the second hole (37) and the notch (65) in a state where one of the second hole (37) and the notch (65) is aligned with the first hole (38).
